# FASCICULE DE BREVET EUROPEEN

(11) **EP 1 142 261 B1**
(45) Date de publication et mention de la délivrance du brevet: **18.05.2005**
(21) Numéro de dépôt: 99958299.2
(22) Date de dépôt: 10.12.1999
(51) Int. Cl.: H04L 29/06

(54) **PROCEDE DE TRANSPORT DE PAQUETS ENTRE UNE INTERFACE D'ACCES ET UN RESEAU PARTAGE**
VERFAHREN ZUM TRANSPORT VON PAKETEN VON EINER ZUGANGSSCHNITTSTELLE ZU EINEM GETEILTEN NETZ
METHOD FOR TRANSPORTING PACKETS BETWEEN A SUBSCRIBER'S INSTALLATION ACCESS INTERFACE AND A SHARED NETWORK, AND ACCESS INTERFACE IMPLEMENTING SAID METHOD

(30) Priorité: 14.12.1998 FR 9815756
(43) Date de publication de la demande: 10.10.2001
(73) Titulaire: Netcentrex, 14000 Caen (FR)
(72) Inventeur: HERSENT, Olivier, F-14000 Caen (FR)
(74) Mandataire: Loisel, Bertrand
(86) Numéro de dépôt international: PCT/FR1999/003097
(87) Numéro de publication internationale: WO 2000/036778

(56) Documents cités:
- GB-A- 2 323 757
- GRAY A: "ROUTER ENCRYPTION MADE EASY - THE HARD WAY" DATA COMMUNICATIONS, vol. 26, no. 2, 1 février 1997 (1997-02-01), page 36, 38 XP000659573 ISSN: 0363-6399
- BRUNO L: "SECURITY" DATA COMMUNICATIONS, vol. 27, no. 1, 1 janvier 1998 (1998-01-01), page 88, 90 XP000733531 ISSN: 0363-6399
- MAKRIS J: "LOCKING DOWN INTRANETS FROM AFAR-FOR LESS" DATA COMMUNICATIONS, vol. 27, no. 11, 1 août 1998 (1998-08-01), page 25/26 XP000782253 ISSN: 0363-6399
- HEYWOOD P: "PRODUCT LEADERS FILTERS WITHOUST FUSS" DATA COMMUNICATIONS, vol. 27, no. 8, 21 mai 1998 (1998-05-21), page 29/30 XP000755584 ISSN: 0363-6399
- BAUSPIESS F ET AL: "REQUIREMENTS FOR CRYPTOGRAPHIC HASH FUNCTIONS" COMPUTERS & SECURITY INTERNATIONAL JOURNAL DEVOTED TO THE STUDY OF TECHNICAL AND FINANCIAL ASPECTS OF COMPUTER SECURITY, vol. 11, no. 5, 1 septembre 1992 (1992-09-01), pages 427-437, XP000296996 ISSN: 0167-4048

## Description

La présente invention concerne les réseaux de transmission par paquets. Elle s'applique notamment, mais non exclusivement, aux réseaux partagés fonctionnant selon le protocole Internet (IP).

La mise en oeuvre de l'invention intervient dans le cadre des relations contractuelles entre un fournisseur d'accès au réseau partagé et ses clients. Le fournisseur dispose, pour le raccordement des installations de ses clients, d'un ou plusieurs routeurs de concentration du réseau partagé. Des lignes de transmission relient ce routeur de concentration aux interfaces d'accès des installations des clients, qui peuvent être des interfaces de routeurs d'accès de réseaux privés.

On désigne ici par fonctions de « police » divers traitements ou contrôles effectués au niveau d'une interface du réseau sur des flux de données qui la traversent. A titre d'exemples non limitatifs, on peut citer le comptage des paquets échangés entre une adresse de source et une adresse de destination données, l'attribution de priorités à certains paquets, des traductions d'adresse, la destruction sélective de certains paquets, etc.

Ces fonctions de police peuvent s'inscrire dans un cadre contractuel entre un abonné (client) et un gestionnaire du réseau (fournisseur de services). Cela peut par exemple être le cas de fonctions relatives à la facturation, au contrôle de débit, aux autorisations d'accès à certains sites reliés au réseau, à la mise en oeuvre de protocoles de réservation tels que RSVP,.... Elles peuvent également s'inscrire dans le cadre de l'organisation interne d'un réseau public ou privé, par exemple pour contrôler certains accès.

Habituellement, les fonctions de police relevant du cadre contractuel entre le fournisseur d'accès et ses clients sont mises en oeuvre au niveau des interfaces de raccordement du routeur de concentration. Ce routeur héberge des logiciels de contrôle des flux qui circulent sur ses différentes interfaces. Les paquets ayant certaines adresses ou ports de provenance ou de destination sont comptés, filtrés, réagencés... selon le type de service offert. Du fait du nombre élevé d'installations susceptibles d'être reliées au routeur de concentration et de la variété de services qui peuvent être rendus pour ces installations, les différents contrôles de flux à appliquer peuvent augmenter considérablement la complexité du routeur. Cet inconvénient est d'autant plus sensible que des traitements de plus en plus divers sont demandés par les clients ou requis par les nouveaux protocoles de réservation.

D'autre part, cette organisation n'est pas souple pour le client qui souhaite faire évoluer certaines caractéristiques du service qui lui est offert. Il doit pour cela s'adresser à son fournisseur pour que celui-ci effectue les changements requis au niveau de son routeur de concentration.

Le document "Router Encryption Made Easy- The Hard Way", A Cray, DATA COMMUNICATIONS, Vol. 26, n°2, 1^{er} février 1997, page 36, 38 XP000 659573 ISSN : 0363-6399, décrit un routeur permettant de chiffrer des paquets IP de manière sélective.

Le document GB 2 323 757 décrit un protocole de tunnellisation sécurisée qui permet la communication à travers un ou plusieurs pare-feux par l'intermédiaire de serveurs mandataires ou proxy.

Le document "Security", L. Bruno, DATA COMMUNICATIONS, Vol. 27, n° 1, 1^{er} janvier 1998, page 88, 90 XP 000733531, ISSN : 0363-6399, décrit un système permettant le chiffrement de données transmises entre des passerelles de réseau.

Le document "Locking Down Intranets From A far-For Less" J. Makris, DATA COMMUNICATIONS, Vol. 27, n° 11, 11 août 1998, pages 25, 26, XP000782253, ISSN : 0363-6399, décrit une architecture s'appuyant sur plusieurs pare-feux pour mettre en place des tunnels sécurisés.

Un but de la présente invention est de proposer un mode de fonctionnement du réseau qui permette la prise en compte d'une grande diversité de contrôles de flux sans se traduire par une augmentation excessive de la complexité des routeurs de concentration, et avec une relative souplesse de configuration.

L'invention propose ainsi un procédé de transport de paquets entre une interface d'accès d'une installation d'abonné et un routeur de concentration d'un réseau partagé, dans lequel l'interface d'accès procède à des opérations de contrôle sur des flux de paquets émis vers le routeur de concentration, dans le cadre d'un contrat entre l'abonné et un gestionnaire du réseau partagé. Après avoir procédé aux opérations de contrôle vis-à-vis d'un paquet à émettre, l'interface d'accès émet ce paquet vers le routeur de concentration avec une signature basée sur un secret partagé avec le routeur de concentration, authentifiant que le paquet a été soumis aux opérations de contrôle.

De préférence, l'obtention de la signature et certaines au moins des opérations de contrôle sont réalisées au sein d'un même circuit intégré, sans accès physique immédiatement en amont de l'obtention de la signature.

Les contrôles de flux relevant du cadre contractuel entre le gestionnaire du réseau et l'abonné sont ainsi décentralisés, ce qui évite que le routeur de concentration ait à assumer toute la diversité des opérations requises par les différents abonnements. Le mécanisme de signature des paquets garantit au gestionnaire du réseau que l'abonné, qui dispose dans ses locaux de l'interface d'accès, ne lui envoie pas de paquets qui n'auraient pas été soumis aux opérations de contrôle de flux, c'est-à-dire qui auraient contourné les fonctions de police et de facturation.

Le procédé donne lieu à une architecture distribuée de l'accès et de la concentration, qui est bien adaptée pour prendre en compte les augmentations de trafic et de diversité de services qu'entraîneront les applications futures.

L'abonné bénéficie en outre d'une plus grande souplesse pour définir dynamiquement les caractéristiques de son abonnement. Il lui suffit d'intervenir au niveau de l'interface d'accès dont il dispose. Il peut d'autre part définir les fonctions de police relevant du cadre contractuel avec le fournisseur d'accès sur la même plate-forme que les autres fonctions de police qu'il utilise pour l'organisation interne de son installation, ce qui simplifie son organisation.

Un autre aspect de la présente invention se rapporte à une interface d'accès pour relier un routeur d'accès d'une installation d'abonné à un routeur de concentration d'un réseau partagé, comprenant des moyens de contrôle des flux de paquets émis vers le routeur de concentration, dans le cadre d'un contrat entre l'abonné et un gestionnaire du réseau partagé, et des moyens de signature recevant les paquets délivrés par les moyens de contrôle de flux et produisant des paquets signés émis vers le routeur de concentration, chaque paquet signé comportant une signature basée sur un secret partagé avec le routeur de concentration, authentifiant que le paquet a été soumis aux moyens de contrôle de flux.

D'autres particularités et avantages de la présente invention apparaîtront dans la description ci-après d'exemples de réalisation non limitatifs, en référence aux dessins annexés, dans lesquels :
- la figure 1 est un schéma d'un réseau où l'invention peut être mise en oeuvre ;
- la figure 2 est un schéma synoptique d'un routeur d'accès d'une installation privée de ce réseau ;
- la figure 3 est un schéma synoptique d'un dispositif de traitement de flux faisant partie d'une interface du routeur de la figure 2 ; et
- la figure 4 est un graphe de traitements élémentaires assurés par le dispositif de la figure 3.

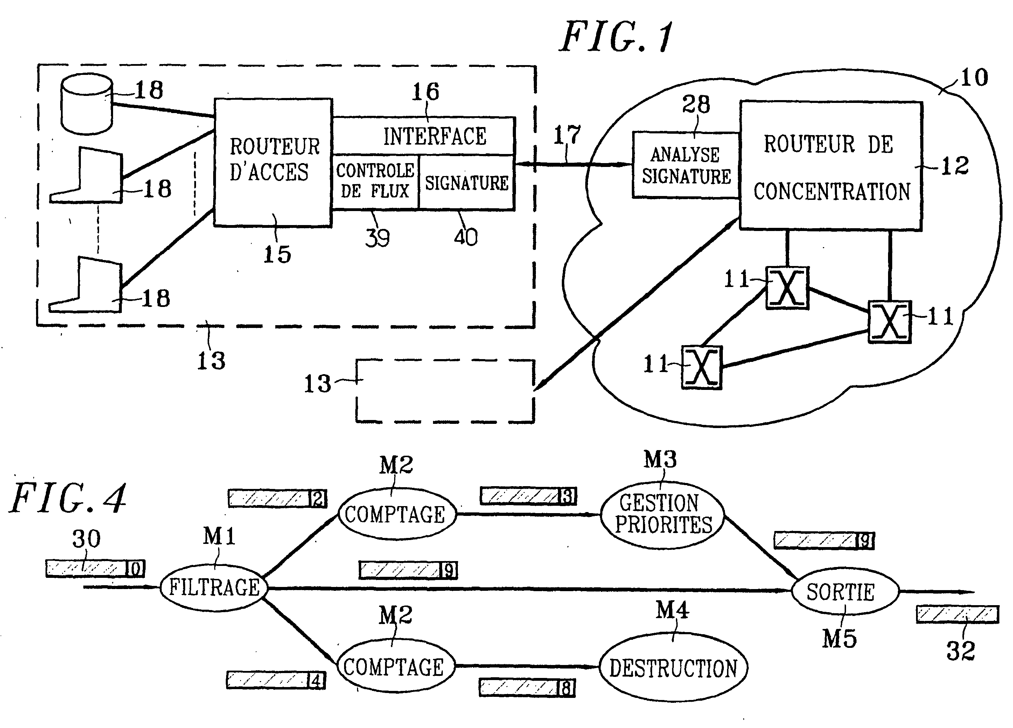

La figure 1 montre un réseau partagé de grande étendue (WAN) 10 comportant un certain nombre de routeurs et commutateurs interconnectés 11,12. On considère ici le cas où le réseau partagé 10 fonctionne selon le protocole IP. Un certain nombre des routeurs sont des routeurs de concentration 12 auxquels sont reliées des installations privées 13.

Une installation privée d'abonné 13 est typiquement reliée au réseau partagé 10 au moyen d'un routeur d'accès 15 dont l'une des interfaces 16 est reliée à une ligne 17 de transmission depuis et vers le routeur de concentration 12. Le routeur d'accès 15 peut être relié à d'autres routeurs de l'installation privée 13 ou à des serveurs ou terminaux 18 de cette installation, au moyen d'autres interfaces non représentées sur la figure 1.

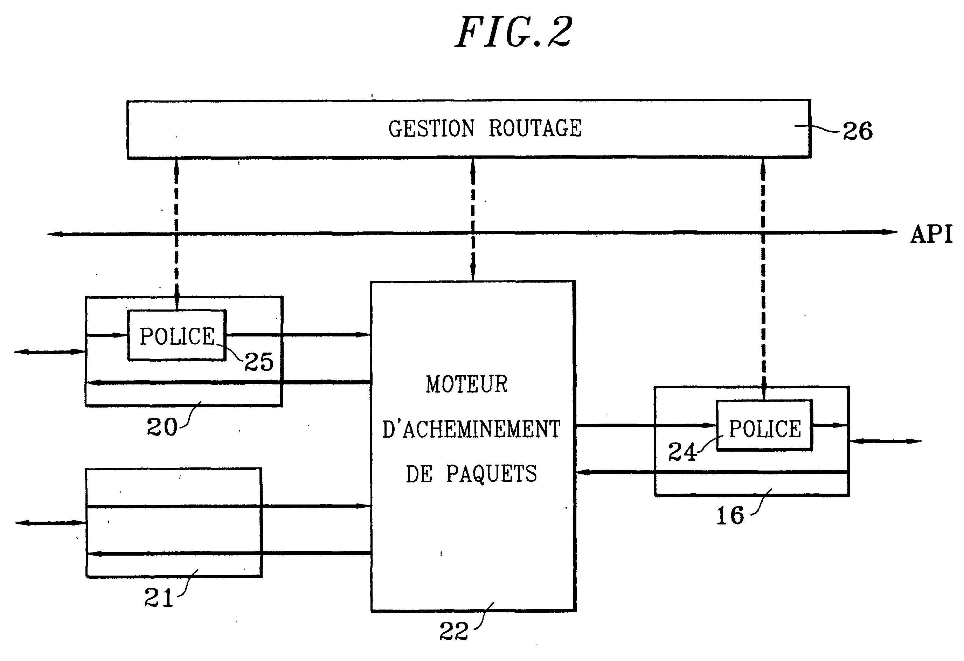

La figure 2 montre un exemple d'architecture du routeur d'accès 15. L'interface extérieure 16, ainsi que les interfaces 20,21 avec le reste de l'installation privée 13, sont reliées au coeur du routeur consistant en un moteur d'acheminement de paquets 22 (« packet forwarding engine »). Le moteur d'acheminement 22 achemine les paquets d'une interface vers une autre sur la base des champs d'adresse et de port contenus dans les en-têtes des paquets conformément au protocole IP et à ses éventuelles extensions (TCP, UDP,...), en se reportant à des tables de routage.

Certaines des interfaces du routeur d'accès 15 sont pourvues, dans l'un seulement ou dans les deux sens de transmission, de dispositifs de traitement, ou processeurs de flux, 24,25 assurant des fonctions de police. Dans l'exemple illustratif de la figure 2, le dispositif 24 équipe l'interface extérieure 16 dans le sens sortant, et le dispositif 25 équipe une autre interface 20 dans le sens entrant.

Le routeur d'accès est supervisé par une unité de gestion 26 pouvant consister en un micro-ordinateur ou une station de travail qui exécute un logiciel de routage servant notamment à configurer la table de routage du moteur d'acheminement 22 et les processeurs de flux 24,25 et à échanger avec eux des informations de contrôle ou de protocole. Ces commandes et échanges se font par l'intermédiaire d'une interface logicielle de programmation (API) appropriée.

La plupart des logiciels de routage et d'acheminement de paquets existants sont facilement disponibles dans l'environnement Unix, mais leur performance est habituellement limitée à cause des interruptions fréquentes du système d'exploitation. Il est beaucoup plus rapide d'utiliser un système d'exploitation en temps réel tel que VxWorks, mais cela complique la mise en place du logiciel de routage.

Le rôle des processeurs de flux 24,25 est d'assister le système d'exploitation non-temps réel (tel qu'Unix), sur la base duquel fonctionne l'unité de gestion 26, dans les tâches complexes de manipulation des flux qui requièrent des performances en temps réel (acheminement, filtrage, chiffrement...). Ces processeurs mettent en oeuvre un certain nombre d'outils de manipulation des flux qui peuvent être reliés dynamiquement suivant toute combinaison pour effectuer la tâche requise. Cette configuration peut être effectuée à travers le système d'exploitation Unix par appel des fonctions d'API, ce qui facilite largement la mise en place de nouvelles fonctionnalités par le programmeur.

Comme illustré schématiquement par la figure 1, l'une des tâches effectuées par le processeur de flux 24 de l'interface extérieure 16 du routeur d'accès 15 consiste à émettre chaque paquet vers le routeur de concentration 12 en lui adjoignant une signature numérique (bloc 40). Cette signature atteste que les paquets en question ont été soumis aux autres opérations de contrôle de flux (bloc 39) effectuées par le processeur 24.

L'interface correspondante 28 du routeur de concentration 12 comporte un module d'analyse des paquets reçus sur la ligne 17 afin de s'assurer de la présence de la signature.

Cette technique de signature permet avantageusement de décentraliser les opérations de contrôle de flux nécessaires aux relations contractuelles entre le gestionnaire du routeur de concentration 12, qui fournit le service de raccordement au réseau partagé 10, et les abonnés dont les installations 13 sont reliées à ce routeur de concentration 12. Dans les réalisations classiques, ces opérations de contrôle de flux sont effectuées au niveau du routeur de concentration. Il en résulte une complexité considérable du routeur de concentration lorsqu'il est raccordé à d'assez nombreuses installations privées, et un manque de souplesse pour les abonnés lorsque des modifications sont requises.

Le fait d'effectuer ces opérations de contrôle de flux au niveau des routeurs d'accès 15 procure à cet égard une grande souplesse. La signature des paquets garantit alors au fournisseur de service que la ligne 17 ne lui envoie pas de paquets valides qui échapperaient au cadre contractuel avec l'abonné. Si un tel paquet venait à apparaître, l'interface 28 du routeur de concentration 12 l'éliminerait simplement après avoir constaté l'absence de la signature adéquate.

Diverses méthodes classiques peuvent être utilisées pour construire et analyser la signature des paquets, sur la base d'un secret partagé entre les routeurs 12 et 15. La signature peut notamment avoir la forme d'un mot de code ajouté au contenu du paquet, et calculé sur la base de tout ou partie de ce contenu et d'une clé secrète, le calcul étant effectué à l'aide d'une fonction extrêmement difficile à inverser pour récupérer la clé secrète. On peut ainsi utiliser une technique de hachage du contenu du paquet, ou d'une partie seulement de ce contenu, par exemple un hachage MD5 (voir R. Rivest, RFC 1231, « The MD5 Message Digest Algorithm »).

On peut également utiliser une méthode de chiffrement pour former la signature des paquets. Le contenu du paquet est alors chiffré à l'aide d'une clé privée, l'interface 28 du routeur de concentration assurant le déchiffrement correspondant à l'aide d'une clé publique ou privée. Les paquets non chiffrés, ou chiffrés au moyen d'une mauvaise clé sont alors détruits au niveau de l'interface 28.

En option, on peut prévoir que l'interface 28 du routeur de concentration signe également les paquets qu'elle émet sur la ligne 17, et que l'interface 16 du routeur d'accès vérifie cette signature pour s'assurer de la validité des paquets reçus.

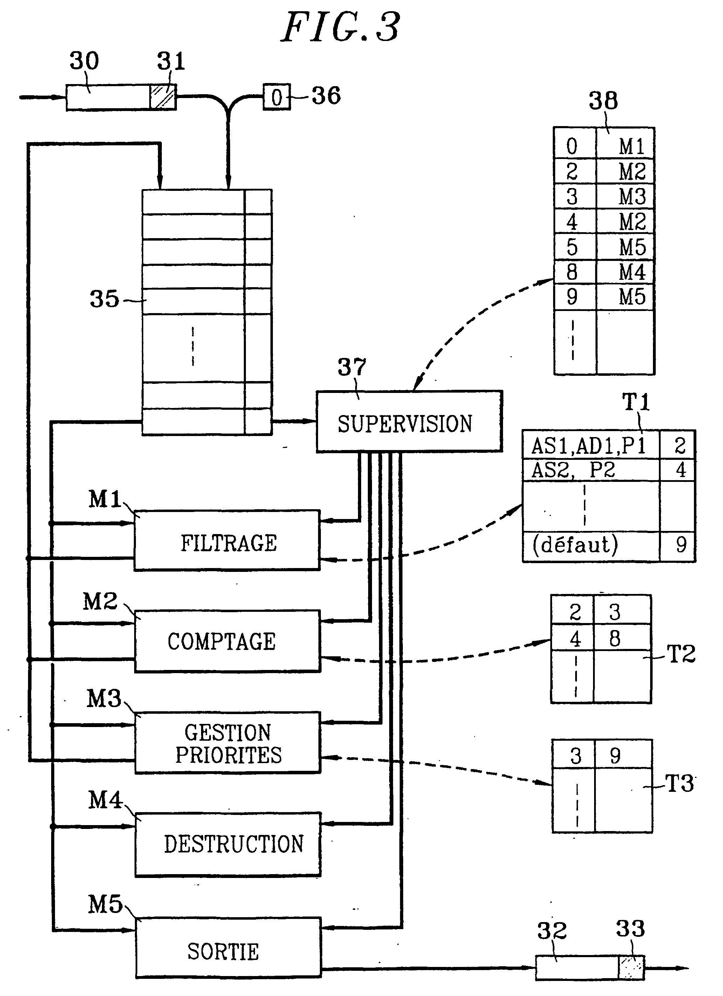

La figure 3 montre l'organisation d'un processeur de flux 24 ou 25 d'une interface du routeur d'accès 15.

Le processeur de flux reçoit une séquence de paquets entrants 30 comportant chacun un en-tête 31 conformément au protocole IP, et délivre une séquence de paquets sortants 32 ayant un en-tête 33 après avoir effectué certains traitements élémentaires dont la nature dépend des flux de données concernés.

Les paquets entrants 30 sont rangés dans une mémoire de paquets 35 organisée en pile de type premier entré - premier sorti (FIFO). Chaque paquet est fourni à la mémoire 35 avec une étiquette de traitement 36. L'étiquette de traitement a initialement une valeur déterminée (0 dans l'exemple représenté) pour les paquets entrants 30.

Le processeur de flux est supervisé par une unité 37 qui coopère avec une table 38 permettant d'associer un module de traitement particulier à chaque valeur de l'étiquette de traitement. Dans l'exemple simplifié représenté sur la figure 3, le processeur de flux comporte un ensemble de cinq modules de traitement M1-M5 opérant des traitements élémentaires de nature différente.

Après l'exécution d'un traitement élémentaire, l'unité de supervision 37 consulte la mémoire de paquets 35. Si celle-ci n'est pas vide, un paquet en est extrait suivant l'organisation FIFO. L'unité de supervision 37 consulte la table 38 pour déterminer quel module de traitement correspond à l'étiquette de ce paquet. L'unité 37 active alors le module en question pour qu'il effectue le traitement élémentaire correspondant. Dans certains cas, ce traitement élémentaire peut entraîner une modification du contenu du paquet, notamment de son en-tête.

On comprendra que l'« extraction » du paquet à laquelle il est fait référence est une extraction au sens logique de la mémoire FIFO. Le paquet n'est pas nécessairement enlevé de la mémoire. Les adresses des paquets dans la mémoire 35 peuvent être gérées de façon classique au moyen de pointeurs pour respecter l'organisation FIFO. Le module de traitement activé peut disposer simplement de l'adresse du paquet courant pour effectuer les lectures, analyses, modifications ou suppressions requises le cas échéant.

Le premier module de traitement M1, associé à l'étiquette initiale 0, est un module de filtrage qui analyse les champs d'adresse et/ou de définition de protocole, et/ou de port de l'en-tête IP des paquets. A l'aide d'une table d'association T1, le module de filtrage M1 délivre une seconde étiquette de traitement qui identifie un enchaînement de traitements élémentaires qui devront ensuite être effectués sur le paquet. Après avoir déterminé la seconde étiquette de traitement pour le paquet extrait de la mémoire 35, le module de filtrage M1 range à nouveau le paquet dans la mémoire 35, avec la seconde étiquette de traitement. Le traitement élémentaire suivant sera alors exécuté au moment où le paquet sera de nouveau extrait de la mémoire.

Le module M2 est un module de comptage des paquets relatifs à certains flux. Dans le cas de la table d'association 38 représentée sur la figure 3, ce module M2 est appelé pour les étiquettes de traitement 2 et 4. Lorsqu'il traite un paquet, le module M2 incrémente un compteur avec le nombre d'octets du paquet, ou encore avec la valeur 1 dans le cas d'un compteur de paquets. Le compteur peut être sécurisé, notamment s'il sert à la facturation de l'abonné par le gestionnaire du réseau 10. Dans le cas d'un compteur sécurisé, des requêtes sont régulièrement faites au fournisseur d'accès pour obtenir des crédits de transmission, les paquets considérés étant détruits si le crédit est épuisé.

Le module M3 de la figure 3 est un module de gestion de priorités. Dans le cas de la table d'association 38 représentée sur la figure 3, ce module M3 est appelé pour l'étiquette de traitement 3. Le module M3 opère sur le champ TOS ("Type Of Service") de l'en-tête IP des paquets. Le TOS est utilisé dans le réseau pour gérer des priorités d'acheminement afin de fournir une certaine qualité de service sur certaines liaisons. Le champ TOS peut être changé selon des tables préenregistrées. Ces tables peuvent être définies sous le contrôle du fournisseur d'accès pour éviter que des paquets soient transmis avec une priorité élevée de façon inappropriée, ce qui pourrait perturber le réseau.

Le traitement élémentaire effectué en dernier sur un paquet de la mémoire 35 est soit sa destruction (module M4 activé par l'étiquette 8), soit sa remise vers la sortie du processeur de flux (module M5 activé par l'étiquette 5 ou 9). Le module M4 peut être utilisé pour détruire des paquets ayant une certaine destination et/ou une certaine provenance.

Les modules M2 et M3, qui ne terminent pas les traitements à assurer pour un paquet (sauf cas de destruction), fonctionnent chacun avec une table de traduction d'étiquette T2,T3. Cette table de traduction désigne, pour l'étiquette de traitement extraite de la mémoire 35 avec le paquet courant, une autre étiquette de traitement désignant le traitement élémentaire suivant à assurer. Le traitement élémentaire assuré par ce module M2 ou M3 se termine par la mise en association du paquet avec cette autre étiquette de traitement et la réinjection du paquet ainsi traité dans la mémoire 35.

C'est ainsi qu'on peut effectuer des combinaisons de traitements très variées sur les différents flux de données traversant le processeur.

La figure 4 montre un exemple simplifié correspondant aux tables 38,T1-T3 représentées sur la figure 3. Le paquet entrant 30, associé à la première étiquette 0 est d'abord soumis au filtrage opéré par le module M1.

Dans le cas particulier considéré, le processeur de flux 24 compte les paquets émis depuis une adresse source AS1 vers une adresse de destination AD1 et un port P1, et modifie le champ TOS de ces paquets avant de les délivrer sur la ligne 17, ce qui correspond à la branche supérieure du graphe de la figure 4. D'autre part, le processeur de flux 24 compte les paquets issus d'une adresse de source AS2 vers un port P2 avant de les détruire, ce qui correspond à la branche inférieure de la figure 4. Les autres paquets sont simplement délivrés vers la ligne 17. La valeur par défaut (9) de l'étiquette de traitement retournée par le module M1 désigne donc simplement le module de sortie M5. Si le module M1 détecte dans le paquet extrait de la mémoire 35 la combinaison AS1, AD1, P1 dans les champs d'adresse et de port pertinents, il retourne le paquet avec l'étiquette de traitement 2. Si les valeurs AS2, P2 sont détectées dans les champs d'adresse et de port, c'est l'étiquette 4 qui est retournée avec le paquet.

Ces étiquettes 2 et 4 correspondent toutes deux au module de comptage M2. L'étiquette va également désigner pour ce module l'adresse mémoire du compteur devant être incrémenté. La table T2 avec laquelle fonctionne le module M2 permettra en fin de traitement d'effectuer le renvoi vers le module suivant à activer (M3 désigné par l'étiquette 3 pour les paquets dont le TOS doit être changé, M4 désigné par l'étiquette 8 pour les paquets à détruire).

Le module M3 reçoit des paquets avec l'étiquette de traitement 3, et les retourne avec l'étiquette 9 après avoir opéré la modification requise du champ TOS.

A partir de cet exemple simplifié, on voit que le processeur de flux permet, à partir de l'identification d'un flux par le module de filtrage M1, d'effectuer diverses combinaisons de traitements élémentaires d'une manière relativement simple et rapide.

Un avantage principal de cette façon de procéder est la souplesse des opérations de configuration du processeur de flux. Les tables 38,T1-T3 qui définissent un graphe quelconque de traitements élémentaires, tel que celui représenté sur la figure 4, peuvent être construites de manière relativement simple et avec une faible contrainte de temps réel au moyen de l'unité de gestion 36 à travers l'API. Il en est de même pour les informations permettant aux modules M1-M5 d'effectuer leurs traitements élémentaires (description des comptages à opérer par le module M2, façon de changer les champs TOS par le module M3, ...).

Dans la pratique, le processeur de flux pourra comprendre divers modules de traitement autres que ceux représentés à titre d'exemple sur les figures 3 et 4, suivant les besoins de chaque installation particulière (par exemple, module de gestion des files d'attente de sortie, module de traduction d'adresses, ...).

La fonction de signature des paquets émis, décrite précédemment, peut faire partie du traitement élémentaire assuré par le module de sortie M5. Dans une réalisation typique du routeur d'accès, le processeur de flux 24 sera inclus dans un circuit intégré d'application spécifique (ASIC) organisé autour d'un coeur de microcontrôleur. Cette réalisation permet qu'il n'y ait aucun accès physique entre les modules de contrôle de flux 39 (du moins ceux qui concernent les relations entre l'abonné et le gestionnaire du réseau 10) et le module M5 qui se charge de la signature des paquets, correspondant au bloc 40 de la figure 1. Ceci améliore la sécurité de la liaison du point de vue du gestionnaire du réseau.

## Revendications

1. Procédé de transport de paquets entre une interface d'accès (16) d'une installation d'abonné (13) et un routeur de concentration (12) d'un réseau partagé (10), **caractérisé en ce que** l'interface d'accès procède à des opérations de contrôle sur des flux de paquets émis vers le routeur de concentration, dans le cadre d'un contrat entre l'abonné et un gestionnaire du réseau partagé, et **en ce qu'**après avoir procédé aux opérations de contrôle vis-à-vis d'un paquet à émettre, l'interface d'accès émet ce paquet vers le routeur de concentration avec une signature basée sur un secret partagé avec le routeur de concentration, authentifiant que le paquet a été soumis aux opérations de contrôle.

2. Procédé selon la revendication 1, dans lequel la signature consiste en un mot de code ajouté au contenu du paquet.

3. Procédé selon la revendication 2, dans lequel ledit mot de code est calculé par une technique de hachage d'une partie au moins du contenu du paquet, faisant intervenir le secret partagé.

4. Procédé selon la revendication 1, dans lequel la signature consiste en un chiffrement du contenu du paquet à l'aide d'une clé privée formant ledit secret partagé.

5. Procédé selon l'une quelconque des revendications 1 à 4, dans lequel l'obtention de la signature et certaines au moins des opérations de contrôle sont réalisées au sein d'un même circuit intégré, sans accès physique immédiatement en amont de l'obtention de la signature.

6. Interface d'accès pour relier un routeur d'accès (15) d'une installation d'abonné (13) à un routeur de concentration (12) d'un réseau partagé (10), **caractérisée en ce qu'**elle comprend des moyens (39) de contrôle de flux de paquets émis vers le routeur de concentration, dans le cadre d'un contrat entre l'abonné et un gestionnaire du réseau partagé, et des moyens de signature (40) recevant les paquets délivrés par les moyens de contrôle de flux et produisant des paquets signés émis vers le routeur de concentration, chaque paquet signé comportant une signature basée sur un secret partagé avec le routeur de concentration, authentifiant que le paquet a été soumis aux moyens de contrôle de flux.

7. Interface selon la revendication 6, dans laquelle la signature consiste en un mot de code ajouté au contenu du paquet.

8. Interface selon la revendication 7, dans laquelle ledit mot de code est calculé par les moyens de signature (40) par une technique de hachage d'une partie au moins du contenu du paquet, faisant intervenir le secret partagé.

9. Interface selon la revendication 6, dans laquelle la signature consiste en un chiffrement du contenu du paquet à l'aide d'une clé privée formant ledit secret partagé.

10. Interface selon l'une quelconque des revendications 6 à 9, dans laquelle les moyens de signature (40) et une partie au moins des moyens de contrôle de flux (39) font partie d'un même circuit intégré, sans accès physique entre les moyens de contrôle de flux et les moyens de signature.

## Patentansprüche

1. Verfahren zum Transport von Paketen zwischen einer Zugangsschnittstelle (16) einer Teilnehmeranlage (13) und einem Konzentrationsrouter (12) eines gemeinsam genutzten Netzes (10), **dadurch gekennzeichnet, dass** die Zugangsschnittstelle im Rahmen einer Vereinbarung zwischen dem Teilnehmer und einem Verwalter des gemeinsam genutzten Netzes Prüfoperationen an zum Konzentrationsrouter übertragenen Paketflüssen durchführt, und dass nach der Durchführung der Prüfoperationen an einem zu sendenden Paket die Zugangsschnittstelle dieses Paket mit einer Signatur zum Konzentrationsrouter sendet, die auf einem gemeinsamen Geheimnis beruht, wobei der Konzentrationsrouter authentifiziert, dass das Paket den Prüfoperationen unterzogen wurde.

2. Verfahren nach Anspruch 1, bei dem die Signatur aus einem zum Inhalt des Pakets hinzugefügten Codewort besteht.

3. Verfahren nach Anspruch 2, bei dem das Codewort durch eine Technik des Zerhackens zumindest eines Teils des Inhalts des Pakets berechnet wird, wobei das gemeinsame Geheimnis eingesetzt wird.

4. Verfahren nach Anspruch 1, bei dem die Signatur aus einer Verschlüsselung des Inhalts des Pakets mit Hilfe eines privaten Schlüssels besteht, der das gemeinsame Geheimnis bildet.

5. Verfahren nach einem der Ansprüche 1 bis 4, bei dem der Erhalt der Signatur und zumindest bestimmte Prüfoperationen innerhalb der gleichen integrierten Schaltung bewirkt werden, ohne physischen Zugriff direkt vor dem Erhalt der Signatur.

6. Zugangsschnittstelle, um einen Zugangsrouter (15) einer Teilnehmeranlage (13) mit einem Konzentrationsrouter (12) eines gemeinsam genutzten Netzes (10) zu verbinden, **dadurch gekennzeichnet, dass** sie Mittel (39) zur Prüfung des zum Konzentrationsrouter gesendeten Paketflusses im Rahmen eines Vertrags zwischen dem Teilnehmer und einem Betreiber des gemeinsam genutzten Netzes und Signaturmittel (40) aufweist, die die von den Mitteln zur Prüfung des Paketflusses gelieferten Pakete empfangen und signierte Pakete erzeugen, die zum Konzentrationsrouter gesendet werden, wobei jedes signierte Paket eine Signatur aufweist, die auf einem gemeinsamen Geheimnis mit dem Konzentrationsrouter beruht und die authentifiziert, dass das Paket den Flussprüfmitteln unterzogen wurde.

7. Schnittstelle nach Anspruch 6, bei der die Signatur aus einem zum Inhalt des Pakets hinzugefügten Codewort besteht.

8. Schnittstelle nach Anspruch 7, bei der das Codewort von den Signaturmitteln (40) durch eine Technik des Zerhackens zumindest eines Teils des Inhalts des Pakets berechnet wird, wobei das gemeinsame Geheimnis eingesetzt wird.

9. Schnittstelle nach Anspruch 6, bei der die Signatur aus einer Verschlüsselung des Inhalts des Pakets mit Hilfe eines privaten Schlüssels besteht, der das gemeinsame Geheimnis bildet.

10. Schnittstelle nach einem der Ansprüche 6 bis 9, bei der die Signaturmittel (40) und zumindest ein Teil der Flussprüfmittel (39) Teil der gleichen integrierten Schaltung sind, ohne physischen Zugriff zwischen den Flussprüfmitteln und den Signaturmitteln

## Claims

1. Method of transporting packets between an access interface (16) of a subscriber installation (13) and a concentrating router (12) of a shared network (10), **characterized in that** the access interface carries out control operations on streams of packets transmitted to the concentrating router, within the framework of a contract between the subscriber and a manager of the shared network, and **in that** after having. carried out the control operations concerning a packet to be transmitted, the access interface transmits this packet to the concentrating router with a signature based on a secret shared with the concentrating router, authenticating that the packet has been subjected to the control operations.

2. Method according to claim 1, wherein the signature consists of a code word added to the content of the packet.

3. Method according to claim 2, wherein said code word is calculated by a technique of hashing at least part of the content of the packet, involving the shared secret.

4. Method according to claim 1, wherein the signature consists of an enciphering of the content of the packet by means of a private key forming said shared secret.

5. Method according to any one of claims 1 to 4, wherein the obtaining of the signature and at least some of the control operations are carried out within a single integrated circuit, without physical access immediately upstream of the obtaining of the signature.

6. Access interface for linking an access router (15) of a subscriber installation (13) to a concentrating router (12) of a shared network (10), **characterized in that** it comprises means (39) for controlling streams of packets transmitted to the concentrating router, within the framework of a contract between the subscriber and a manager of the shared network, and signature means (40) receiving the packets delivered by the stream control means and producing signed packets transmitted to the concentrating router, each signed packet comprising a signature based on a secret shared with the concentrating router, authenticating that the packet has been subjected to the stream control means.

7. Interface according to claim 6, wherein the signature consists of a code word added to the content of the packet.

8. Interface according to claim 7, wherein said code word is calculated by the signature means (40) by a technique of hashing at least part of the content of the packet, involving the shared secret.

9. Interface according to claim 6, wherein the signature consists of an enciphering of the content of the packet by means of a private key forming said shared secret.

10. Interface according to any one of claims 6 to 9, wherein the signature means (40) and at least part of the stream control means (39) belong to a single integrated circuit, without physical access between the stream control means and the signature means.
